# EUROPÄISCHE PATENTSCHRIFT

(11) **EP 3 019 340 B1**
(45) Veröffentlichungstag und Bekanntmachung des Hinweises auf die Patenterteilung: **02.06.2021**
(21) Anmeldenummer: 14731969.3
(22) Anmeldetag: 23.06.2014
(51) Int. Cl.: B60B 3/08, B60B 3/12, B60B 7/02, B60B 7/06, B60B 7/18, B60B 3/04

(54) **FAHRZEUGRAD UND VERFAHREN ZUR HERSTELLUNG EINES FAHRZEUGRADES**
VEHICLE WHEEL AND METHOD FOR PRODUCING A VEHICLE WHEEL
ROUE DE VÉHICULE ET PROCÉDÉ DE FABRICATION D'UNE ROUE DE VÉHICULE

(30) Priorität: 12.07.2013 DE 102013107394
(43) Veröffentlichungstag der Anmeldung: 18.05.2016
(73) Patentinhaber: ThyssenKrupp Steel Europe AG, 47166 Duisburg (DE)
(72) Erfinder: PIERONEK, David, 44329 Dortmund (DE); GRÜNEKLEE, Axel, 47249 Duisburg (DE); ZÖRNACK, Markus, Lake Orion, Michigan 48362 (US)
(74) Vertreter: ThyssenKrupp Steel Europe AG
(86) Internationale Anmeldenummer: PCT/EP2014/063161
(87) Internationale Veröffentlichungsnummer: WO 2015/003892

(56) Entgegenhaltungen:
- DE-A1- 10 127 639
- DE-A1-102010 032 429
- DE-A1-102010 032 429
- US-A- 5 845 973
- US-A- 5 845 973
- US-A1- 2006 071 539
- US-A1- 2006 071 539

## Beschreibung

Die vorliegende Erfindung betrifft ein Fahrzeugrad, insbesondere für Kraftfahrzeuge, mit einem eine Öffnung aufweisenden Felgenring, mit einem zumindest teilweise in der Öffnung des Felgenrings angeordneten Grundträger, wobei der Grundträger einen Anbindungsbereich mit Aufnahmen für Anbindungsmittel zur Anbindung des Fahrzeugrades an das Fahrzeug aufweist, und mit einer Abdeckschale zur zumindest teilweisen Abdeckung des Grundträgers, wobei die Abdeckschale derart ausgestaltet ist, dass der Grundträger zumindest im Bereich der Aufnahmen frei von der Abdeckschale, wobei die Abdeckschale mit dem Grundträger und dem Felgenring stoffschlüssig verbunden ist. Weiterhin betrifft die vorliegende Erfindung ein Verfahren zur Herstellung eines Fahrzeugrades, insbesondere eines erfindungsgemäßen Fahrzeugrades, wobei ein eine Öffnung aufweisender Felgenring, ein zumindest teilweise in der Öffnung des Felgenrings anordenbarer Grundträger mit einem Anbindungsbereich mit Aufnahmen für Anbindungsmittel zur Anbindung des Fahrzeugrades an das Fahrzeug, und eine Abdeckschale zur zumindest teilweisen Abdeckung des Grundträgers bereitgestellt wird, wobei der Grundträger mit der Abdeckschale verbunden wird und zumindest im Bereich der Aufnahmen frei von der Abdeckschale bleibt.

Häufig werden Räder für Kraftfahrzeuge, wie etwa PKW, und insbesondere deren Grundträger aus Stahl hergestellt. Dabei sind die Grundträger beispielsweise als flächige Radschüssel ausgebildet. Es ist weiterhin bekannt, beispielsweise zur besseren Kühlung oder zur Gewichtsreduzierung einen Lochkreis in dem Grundträger vorzusehen. Da solche Räder jedoch häufig nicht den ästhetischen Ansprüchen der Kunden genügen, können Radkappen oder Zierblenden beispielsweise aus Kunststoff eingesetzt werden, welche den Grundträger im Wesentlichen vollständig abdecken und ein flexibles Design erlauben. Aber auch diese Maßnahmen genügen häufig nicht den ästhetischen Ansprüchen, da die Radkappen in der Regel als solche erkannt werden.

Einen besseren optischen Eindruck können hingegen sogenannte Leichtmetall-Felgen bieten, bei welchen der Felgenring und der Grundträger einstückig oder mehrstückig geschmiedet oder gegossen sind. Allerdings ist hierfür im Vergleich zu herkömmlichen Stahlfelgen ein erhöhter Herstellungsaufwand und Kostenaufwand in Kauf zu nehmen. Zudem ist die Korrosionsbeständigkeit selbst bei leichter Beschädigung derartiger Räder oftmals problematisch.

Ferner sind sogenannte Stahl-Strukturräder bekannt. Hierbei kann der Grundträger derart reduziert werden, dass der Grundträger im Speichen-Design ausgestaltet sein kann. Auch hier werden zur Erzielung einer ansprechenden Optik und einer ausreichenden Design-Flexibilität Kunststoffradkappen eingesetzt. Insbesondere ist allerdings nachteilig, dass aufgrund des reduzierten Grundträgers mit Speichenstruktur ein bis zu 25% höheres Gewicht im Vergleich zu konventionellen Stahlbauweise in Kauf genommen werden muss, um eine ausreichende Steifigkeit und Festigkeit zu gewährleisten. Dies rührt insbesondere von der notwendigen hohen Wandstärke des Grundträgers her. Die hohen Wandstärken machen zudem hohe Umformkräfte bei der Herstellung notwendig und sind eingeschränkt in ihrer Formgebungsfreiheit.

In Anbetracht dieser Problematik werden im Stand der Technik der DE 101 27 639 A1 eingangs genannte Fahrzeugräder vorgeschlagen. Demnach wird ein Rad aufweisend einen Felgenring und einen Grundträger mit einer Abdeckschale versehen, um hohe Wandstärken zu vermeiden. Dabei weist die einteilige Abdeckschale im Wesentlichen die Form des Grundträgers auf und besitzt wie der Grundträger Öffnungen, sodass die Abdeckschale gemeinsam mit dem Grundträger an die Nabe des Kraftfahrzeugs mittels einer Schraubverbindung angebunden werden kann. Dazu liegt die Abdeckschale im Bereich der Öffnungen auf dem Anschraubflansch des Grundträgers auf. Durch die gemeinsame Verbindung von Abdeckschale und Grundträger an die Fahrzeugnabe wird eine ausreichende Steifigkeit des Rades gewährleistet.

Es hat sich gezeigt, dass durch eine derartige Konstruktion zwar ein geringeres Gewicht bei erhöhter Gestaltungsfreiheit erreicht werden kann. Allerdings hat sich herausgestellt, dass es insbesondere im Betrieb zu Relativbewegungen zwischen der Abdeckschale und dem Grundträger kommen kann, die sich negativ auf die Schraubverbindungen und damit verbunden auf einen sicheren Schraubensitz und die Verspannkraft der Schraube auswirken können. Zudem ist es weiterhin wünschenswert, zusätzliche Gewichtseinsparungen zu erzielen.

Als weiteren Stand der Technik sind die Druckschriften US 2006/0071539 A1, DE 10 2010 032 429 A1 und US 5 845 973 zu nennen.

Ausgehend von diesem Stand der Technik liegt der Erfindung daher die Aufgabe zugrunde, ein Fahrzeugrad anzugeben, welches trotz eines geringen Gewichts und einer ausreichenden Steifigkeit bei hoher Design-Flexibilität eine sichere Anbindung, insbesondere mit reduziertem bzw. ohne Verspannkraftverlust, ermöglicht. Zudem soll ein Verfahren zur Herstellung eines Fahrzeugrades angegeben werden.

Die zuvor genannte Aufgabe wird gemäß einer ersten Lehre der Erfindung bei einem gattungsgemäßen Fahrzeugrad dadurch gelöst, dass die Abdeckschale aus einem Stahlblech hergestellt ist oder aus einem Material aufweisend Edelstahl, Aluminium und/oder Magnesium besteht, die Abdeckschale eingerichtet ist, einen Teil, insbesondere einen im Vergleich zum Grundträger geringeren Teil, der Betriebslast zu tragen.

Dadurch, dass erfindungsgemäß der Grundträger zumindest im Bereich der Aufnahmen frei von der Abdeckschale ist, ist im unmittelbaren Bereich der Aufnahmen kein Material der Abdeckschale vorhanden, sodass in diesem Bereich keine Materialdopplung durch das Material von Grundträger einerseits und Abdeckschale andererseits entsteht. Es wird erreicht, dass die Anbindungsmittel zwar mit den Aufnahmen im Grundträger interagieren, jedoch nicht mit der Abdeckschale, sodass die Abdeckschale nicht an der Anbindung des Grundträgers bzw. des Fahrzeugrades an das Fahrzeug beteiligt ist. Die Abdeckschale kann dazu beispielsweise derart ausgeführt sein, dass eine oder mehrere Aussparungen in der Abdeckschale im Bereich der Aufnahmen vorgesehen sind oder dass eine Beabstandung der Abdeckschale im Bereich der Aufnahmen vorgesehen ist.

Erfindungsgemäß wurde erkannt, dass die Anwesenheit der Abdeckschale im Bereich der Aufnahmen die sichere Anbindung nachteilig beeinflussen kann. Durch die erfindungsgemäße Ausgestaltung des Fahrzeugrades kann eine sichere Anbindung erreicht werden, da die notwendige Vorspannung durch die Anbindungsmittel durch eine Anwesenheit der Abdeckschale im Bereich der Aufnahmen nicht negativ beeinflusst wird. Zudem hat sich gezeigt, dass die Korrosionsbeständigkeit durch Fehlstellen bei dem kathodischen Tauchlackieren (KTL-Prozess) beeinträchtigt wird. Gleichzeitig wurde erkannt, dass eine ausreichende Steifigkeit des Fahrzeugrades gewährleistet werden kann, obwohl keine unmittelbare Anbindung der Abdeckschale mittels der Anbindungsmittel erfolgt. Zudem wird durch den modularen Aufbau des Fahrzeugrades mittels Grundträger und Abdeckschale eine hohe Design-Vielfalt bzw. ein variables Design des Fahrzeugrades aufrechterhalten. Schließlich kann sich die vermiedene Materialdopplung im Bereich der Aufnahmen auch positiv auf eine Gewichtsreduzierung auswirken.

Im Ergebnis kann ein Fahrzeugrad angegeben werden, welches trotz eines geringen Gewichts und einer ausreichenden Steifigkeit bei hoher Design-Flexibilität eine sichere Anbindung ermöglicht.

Die in dem Anbindungsbereich des Grundträgers vorgesehenen Aufnahmen für die Anbindungsmittel können besonders einfach als Durchführungen oder Löcher, beispielsweise Bolzenlöcher, ausgestaltet sein. In diesem Fall sind die Anbindungsmittel vorzugsweise als Stifte, Bolzen oder Schrauben ausgeführt, welche teilweise durch die Aufnahmen hindurchgeführt werden können und an einer Nabe des Fahrzeugs befestigt werden können. Durch die Interaktion der Anbindungsmittel mit dem Grundträger im Bereich der Aufnahmen kann das Fahrzeugrad dann an der Nabe des Fahrzeugs fixiert werden.

Des Weiteren ist die Abdeckschale mit dem Grundträger und dem Felgenring stoffschlüssig verbunden Es hat sich gezeigt, dass durch die Verbindung der Abdeckschale mit dem Grundträger und dem Felgenring eine stabile Tragekonstruktion bereitgestellt werden kann, auch ohne dass die Abdeckschale im Bereich der Aufnahmen des Grundträgers zusammen mit dem Grundträger mittels der Anbindungsmittel an einer Nabe des Fahrzeugs befestigt wird.

Erfindungsgemäß ist die Abdeckschale des Fahrzeugrades aus einem Stahlblech hergestellt, wodurch sich besonders vorteilhafte Steifigkeitseigenschaften bei geringem Gesamtgewicht des Fahrzeugrades ergeben. Alternativ besteht die Abdeckschale aus einem Material aufweisend Edelstahl, Aluminium oder Magnesium. Insbesondere kann die Abdeckschale die genannten Materialien nicht nur aufweisen, sondern aus diesen bestehen. Die Materialien ermöglichen eine optimale Anpassung an die jeweiligen Anforderungen der Komponenten, insbesondere in Hinblick auf die Steifigkeit bei variablem Design.

Erfindungsgemäß trägt die Abdeckschale einen Teil, insbesondere einen im Vergleich zum Grundträger geringeren Teil, der Betriebslast, so dass die Tragestruktur durch einen Verbund aus Grundträger und Abdeckschale gebildet wird. So wird besonders vorteilhaft die Steifigkeit des Fahrzeugrades erhöht. Gleichzeitig kann durch die Lastverteilung auf Grundträger und Abdeckschale eine Materialeinsparung und damit eine Gewichtsreduzierung beim Grundträger erfolgen, da dieser beispielsweise dünner ausgeführt werden kann. Dies kann zudem einen positiven Einfluss auf die Herstellung des Fahrzeugrades haben, da der Grundträger dann aufgrund der dünneren Ausgestaltung effizienter, insbesondere mit geringeren Kräften, umgeformt werden kann, wodurch sich die Pressenkräfte verringern.

Es hat sich herausgestellt, dass ein hohes Maß an Steifigkeit erreicht wird, wenn die Abdeckschale einen im Vergleich zum Grundträger geringeren Teil der Betriebslast trägt. Dies ist insbesondere deshalb vorteilhaft, da der Grundträger im Bereich der Aufnahmen frei von der Abdeckschale ist und vorzugsweise nur der Grundträger mittels der Anbindungsmittel direkt mit einer Nabe des Fahrzeugs verbunden ist. Vorzugsweise übernimmt der Grundträger nicht nur einen größeren Teil der Betriebslast im Vergleich zur Abdeckschale, sondern den überwiegenden Teil der Betriebslast.

Vorzugsweise ist nicht nur die Abdeckschale, sondern auch der Grundträger schalenartig ausgestaltet. Der Grundträger weist bevorzugt eine zentrale Nabenöffnung auf, welche an eine Nabe des Fahrzeugs zur Montage angepasst ist. Vorzugsweise sind die Aufnahmen im Anbindungsbereich des Grundträgers auf einer konzentrischen Kreislinie um die Nabenöffnung herum angeordnet, vorzugsweise in regelmäßigen Abständen. In anderen Worten sind die Aufnahmen im Anbindungsbereich des Grundträgers in Form eines Lochkreises um die Achse des Fahrzeugrades herum angeordnet. So wird eine hohe Kompatibilität mit gängigen Radnaben und eine einfache und sichere Anbindung erreicht.

Die Abdeckschale ist vorzugsweise ausschließlich zur einseitigen und außenseitigen Abdeckung des Grundträgers vorgesehen, sodass das Design des Fahrzeugrades mit geringem Materialaufwand außenseitig angepasst werden kann. Unter Außenseite ist die im montierten Zustand vom Fahrzeug wegweisende Seite zu verstehen.

Die Abdeckschale ist vorzugsweise einstückig ausgestaltet, um ein möglichst einfache Herstellung und hohe Steifigkeit der Abdeckschale und damit des Fahrzeugrades zu erreichen.

Durch das Vorsehen eines Grundträgers und einer hiervon separaten Abdeckschale ergibt sich zudem eine hohe Modularität der Fahrzeugräder, da unterschiedliche Abdeckschalen zu einem identischen Grundträger kompatibel gestaltet werden können, sodass unterschiedliche Abdeckschalen mit jeweils identisch ausgebildete Grundträger kombiniert werden können. Dies erleichtert die Produktion des Fahrzeugrades, da bei der Herstellung des Grundträgers das finale Design des Fahrzeugrades nicht berücksichtigt werden muss. Es sind also beispielsweise Fahrzeugräder mit identisch ausgebildeten Grundträgern und unterschiedlichen Abdeckschalen möglich.

Besonders gute Steifigkeitseigenschaften bei geringem Gewicht werden dabei dadurch erzielt, dass der Grundträger, der Felgenring und/oder die Abdeckschale in Blechbauweise hergestellt sind. Die Bleche zur Herstellung der Komponenten haben vorzugsweise eine Dicke von maximal 5 mm, bevorzugt maximal 4 mm.

Die Geometrie der Abdeckschale kann optional strömungsoptimiert sein, indem der Strömungswiderstand des Fahrzeugrades im Betrieb durch die Formgebung der Abdeckschale möglichst geringgehalten wird.

Gemäß einer Ausgestaltung des Fahrzeugrades weist die Abdeckschale eine mittige Lochung auf, sodass der Grundträger zumindest im Bereich der Aufnahmen frei von der Abdeckschale ist. Es ist also zumindest der Bereich der Aufnahmen bzw. der Bereich um die Aufnahmen herum im Anbindungsbereich des Grundträgers frei von der Abdeckschale. Durch eine mittig angeordnete Lochung in der Abdeckschale, wird auf einfache Weise erreicht, dass der Grundträger im Bereich der Aufnahmen im Anbindungsbereich des Grundträgers frei von der Abdeckschale ist. Zudem wird auf diese Weise vorteilhaft das Gewicht der Abdeckschale reduziert. Die mittige Lochung ist dabei vorzugsweise rund. Vorzugsweise ist die Abdeckschale so ausgestaltet, dass der Anbindungsbereich im Wesentlichen vollständig frei von der Abdeckschale ist.

Es ist allerdings möglich, für den Anbindungsbereich eine lokale Abdeckkappe vorzusehen, welche im Wesentlichen die mittige Lochung der Abdeckschale und somit lokal den Anbindungsbereich des Grundträgers abdeckt. Dies ist insbesondere vorteilhaft, falls der Anbindungsbereich im Wesentlichen vollständig frei von der Abdeckschale ist. So kann auch im Anbindungsbereich eine hohe Gestaltungsfreiheit durch die lokale Abdeckkappe erreicht werden bzw. der Anbindungsbereich geschützt werden.

In einer zur zuvor genannten alternativen Ausgestaltung des Fahrzeugrades ist die Abdeckschale im Anbindungsbereich des Grundträgers zumindest abschnittsweise vom Grundträger beabstandet, sodass der Grundträger zumindest im Bereich der Aufnahmen frei von der Abdeckschale ist. Dadurch kann die Abdeckschale im Anbindungsbereich des Grundträgers im Wesentlichen durchgängig oder geschlossen ausgeführt werden und ein einheitlicheres Erscheinungsbild des Fahrzeugrades ermöglichen. In diesem Fall sind jedoch Aussparungen in der Abdeckschale jeweils im Bereich der Aufnahmen vorteilhaft, um die die Anbindungsmittel durch die Abdeckschale hindurchführen zu können.

Gemäß einer weiteren Ausgestaltung des Fahrzeugrades weist der Grundträger eine Versteifungswelle auf und die Abdeckschale endet in radial einwärtiger Richtung gesehen zumindest abschnittsweise im Bereich der Versteifungswelle. Die Versteifungswelle läuft bevorzugt konzentrisch um die Achse des Fahrzeugrades bzw. um eine Nabenöffnung des Grundträgers herum. Vorzugsweise umläuft die Versteifungswelle den Anbindungsbereich des Grundträgers. Es hat sich gezeigt, dass in diesem Fall eine stabile Konstruktion bei geringem Gewicht einfach herstellbar ist.

Insbesondere kann die Abdeckschale besonders vorteilhaft im Bereich der Versteifungswelle mit dem Grundträger verbunden werden. In dieser Hinsicht ist jedoch ebenfalls denkbar, eine Versteifungswelle im Grundträger vorzusehen und, wie bereits beschrieben, die Abdeckschale im Anbindungsbereich des Grundträgers im Wesentlichen durchgängig oder geschlossen und im Anbindungsbereich des Grundträgers zumindest abschnittsweise vom Grundträger beabstandet zu gestalten. Auch in diesem Fall ist es vorteilhaft, den Grundträger mit der Abdeckschale im Bereich der Versteifungswelle zu verbinden.

Zur Verbindung der Abdeckschale kommen insbesondere Verbindungsmethoden wie Schweißen, beispielsweise Laserschweißen, und/oder Löten in Betracht, insbesondere, wenn die zu verbindenden Komponenten aus Metall, vorzugsweise Stahl, bestehen. Der Verbindungsvorgang kann insbesondere unter Schutzgas durchgeführt werden, wahlweise mit inertem (MIG) oder aktivem Gas (MAG). Vorzugsweise werden ein MAG-Schweißen und/oder ein MIG-Löten durchgeführt. CMT-Löten und/oder CMT-Schweißen können ebenfalls alternativ durchgeführt werden. Als alternative stoffschlüssige Verbindung kann auch eine Klebeverbindung vorgesehen sein, was insbesondere eine erhöhte Freiheit bei der Materialwahl der Komponenten ermöglichen kann. Als form- bzw. kraftschlüssige Verbindung kann beispielweise ein zumindest bereichsweises Einpressen der Abdeckschale in den Grundträger und/oder den Felgenring erfolgen. Bevorzugt sind jedoch insbesondere wärmearme bzw. wärmelose Fügeverfahren, wie etwa Löten oder Kleben, um möglichst geringen Einfluss auf die Form oder Struktur der zu verbindenden Komponenten auszuüben. Eine weitere Möglichkeit der Verbindung sind kalte Fügetechniken, wie beispielsweise Stanznieten, Clinchen, Bördeln, insbesondere auch mit Blick in Richtung Mischbaulösungen.

Die möglichen Verbindungszonen, in denen die Abdeckschale mit dem Grundträger und/oder dem Felgenring verbunden wird oder werden kann, hängen von der jeweiligen konkreten Geometrie der Komponenten ab. Bevorzugt sind die Abdeckschale und der Grundträger so gestaltet, dass eine mögliche Verbindungszone zwischen der Abdeckschale und dem Grundträger im radial inneren Endbereich der Abdeckschale, im Bereich einer Versteifungswelle des Grundträgers und/oder im Bereich einer oder mehrere Speichen des Grundträgers bzw. der Abdeckschale, insbesondere im Randbereich der Speichen, liegt. Bevorzugt sind die Abdeckschale und der Felgenring so gestaltet, dass eine mögliche Verbindungszone zwischen der Abdeckschale und dem Felgenring im radial äußeren Endbereich der Abdeckschale liegt, welcher beispielsweise durch einen ringförmigen Bereich oder durch die radial äußeren Enden der Speichen gebildet werden kann.

Gemäß einer weiteren Ausgestaltung des Fahrzeugrades sind der Grundträger und die Abdeckschale in Speichenbauweise ausgebildet und die Speichen der Abdeckschale überdecken zumindest abschnittsweise zumindest einen Teil der Speichen des Grundträgers. Der Grundträger und die Abdeckschale weisen also mehrere radial verlaufende Speichen auf, beispielsweise eine gerade oder ungerade Anzahl von Speichen, beispielsweise zwischen 3 und 20 Speichen. Bevorzugt weisen die Abdeckschale und der Grundträger die gleiche Anzahl an Speichen auf.

Es hat sich gezeigt, dass mit einer Speichenbauweise sowohl beim Grundträger als auch bei der Abdeckschale eine ausreichende Steifigkeit und Gewichtsoptimierung realisierbar ist, obwohl der Grundträger zumindest im Bereich der Aufnahmen frei von der Abdeckschale ist. Zudem werden durch die Speichenbauweise eine optisch ansprechende Gestaltung des Fahrzeugsrades und eine zusätzliche Designfreiheit erreicht.

Damit, dass die Speichen der Abdeckschale zumindest einen Teil der Speichen des Grundträgers überdecken, ist gemeint, dass die Speichen der Abdeckschale nicht alle Speichen des Grundträgers überdecken müssen. Dies kann insbesondere der Fall sein, wenn der Grundträger mehr Speichen als die Abdeckschale aufweist. Damit, dass die Speichen der Abdeckschale zumindest abschnittsweise die Speichen des Grundträgers überdecken, ist gemeint, dass die Speichen der Abdeckschale die Speichen des Grundträgers nicht vollständig überdecken müssen. Insbesondere können die Speichen der Abdeckschale Aussparungen zur weiteren Gewichtsreduzierung und/oder Gestaltung aufweisen.

Sind der Grundträger und die Abdeckschale in Speichenbauweise ausgebildet, ist es besonders vorteilhaft, wenn die Abdeckschale mit dem Grundträger im Bereich der Speichen zumindest abschnittsweise miteinander verbunden ist.

Gemäß einer weiteren Ausgestaltung des Fahrzeugrades weist die Abdeckschale mindestens einen ringförmigen Bereich auf, welcher die Speichen der Abdeckschale an ihren radial äußeren Enden und/oder an ihren radial inneren Enden verbindet. Es können grundsätzlich jedoch auch mehre ringförmige Bereiche vorgesehen sein, beispielsweise zwei ringförmige Bereiche, wobei ein radial äußerer ringförmiger Bereich die Speichen der Abdeckschale an ihren radial äußeren Enden und ein radial innerer ringförmiger Bereich die Speichen der Abdeckschale oder an ihren radial inneren Enden verbindet. Durch einen oder mehrere ringförmige Bereiche kann die Stabilität und Steifigkeit des Fahrzeugrades weiterhin erhöht werden.

Sind der Grundträger und/oder der Felgenring gemäß einer weiteren Ausgestaltung des Fahrzeugrades aus einem Stahlblech hergestellt, ergeben sich besonders vorteilhafte Steifigkeitseigenschaften bei geringem Gesamtgewicht des Fahrzeugrades.

Insbesondere der Grundträger und/oder die Abdeckschale können beispielsweise mittels Tiefziehen eines Stahlblechs hergestellt werden. Alternativ kann auch ein Warmumformen erfolgen. Der Felgenring kann beispielsweise aus einem Stahlblech mittels Profilieren hergestellt werden. Zusätzlich oder alternativ ist jedoch auch denkbar, dass weitere Herstellungs- und insbesondere Umformungsverfahren für die einzelnen Komponenten eingesetzt werden. Beispielsweise kann eine Umformung mittels Drückwalzen erfolgen.

Gemäß einer weiteren Ausgestaltung des Fahrzeugrades bestehen der Grundträger und/oder der Felgenring aus einem Material aufweisend Edelstahl, Aluminium, Magnesium, ein Mehrlagenmaterial und/oder einen faserverstärkten Kunststoff. Insbesondere können die Abdeckschale, der Grundträger und/oder der Felgenring die genannten Materialien nicht nur aufweisen, sondern aus diesen bestehen. Die Materialien ermöglichen eine optimale Anpassung an die jeweiligen Anforderungen der Komponenten, insbesondere in Hinblick auf die Steifigkeit bei variablem Design. Ist ein Mehrlagenmaterial, insbesondere ein metallisches Mehrlagenmaterial, vorgesehen, wird dieses bevorzugt durch Walzplattieren hergestellt. Vorzugsweise ist primär die Abdeckschale aus diesen Materialien hergestellt. Für den Felgenring kommt neben Stahl insbesondere ein faserverstärkter Kunststoff in Betracht. Weitestgehend unabhängig vom Material kann die Abdeckschale zudem zur weiteren Verbesserung der Oberflächeneigenschaften vorlackiert sein.

Gemäß einer weiteren Ausgestaltung des Fahrzeugrades ist die Abdeckschale, der Grundträger und/oder der Felgenring aus einem an die Beanspruchung lokal angepassten Halbzeug hergestellt, um maßgeschneiderte Bauteile und damit eine weiterhin verbesserte Steifigkeit bei geringem Gewicht und hoher Bauteillebensdauer bereitzustellen. Derartige an die Beanspruchung lokal angepasste Halbzeuge können insbesondere Bänder, beispielsweise "Tailored Strips" wie "TailorRolled Strips" oder "TailorWelded Strips", oder auch Bleche, beispielsweise "Tailored Blanks" wie "TailorWelded Blanks" oder "TailorRolled Blanks", sein, welche unterschiedliche Materialien, Materialeigenschaften und/oder Geometriebereiche, insbesondere Dickenbereiche, aufweisen.

Gemäß einer weiteren Ausgestaltung des Fahrzeugrades ist der Felgenring mit dem Grundträger und/oder der Abdeckschale im Bereich eines Tiefbetts des Felgenrings und/oder im Bereich eines Felgenhorns des Felgenrings miteinander verbunden. Eine Verbindung des Grundträgers oder der Abdeckschale im Bereich einer Schulter oder eines Felgenhorns des Felgenrings (Full-Face- oder Semi-Full-Face-Konzept) kann beispielsweise mehr Platz auf der Innenseite des Grundträgers bereitstellen, beispielsweise für eine Bremsvorrichtung. Eine weiter innen liegende Verbindung im Bereich eines Tiefbetts des Fahrzeugrades hingegen kann für die erforderliche Steifigkeit des Fahrzeugrades oder für ausreichend Platz für die Abdeckschale erforderlich sein.

Besonders bevorzugt erfolgt die Anbindung des Grundträgers an den Felgenring im Tiefbett der Felge. Die Anbindung der Abdeckschale an den Felgenring erfolgt hingegen bevorzugt im Bereich des Felgenhorns, da so eine vergleichsweise hohe Steifigkeit mit einer ansprechenden Optik, insbesondere kann hierdurch der Raddurchmesser optisch vergrößert werden, kombiniert werden kann.

Gemäß einer zweiten Lehre der Erfindung wird die eingangs genannte Aufgabe bei einem gattungsgemäßen Verfahren zur Herstellung eines Fahrzeugrades dadurch gelöst, dass zunächst der Grundträger mit dem Felgenring und anschließend die Abdeckschale mit dem Grundträger und zusätzlich mit dem Felgenring verbunden wird, oder zunächst der Grundträger mit der Abdeckschale und anschließend der Felgenring mit dem Grundträger und zusätzlich mit der Abdeckschale verbunden wird, wobei die Abdeckschale aus einem Stahlblech, insbesondere mittels Tiefziehen, hergestellt wird.

Erfindungsgemäß wird zunächst der Grundträger mit dem Felgenring und anschließend die Abdeckschale mit dem Grundträger und optional zusätzlich mit dem Felgenring verbunden. In einem alternativen Verfahren wird zunächst der Grundträger mit der Abdeckschale und anschließend der Felgenring mit dem Grundträger und optional zusätzlich mit der Abdeckschale verbunden. Durch die einzelne bzw. separate Fertigung des Grundträgers, des Felgenrings und der Abdeckschale und dem anschließenden schrittweisen Zusammenbau wird die Herstellung des Fahrzeugrades einfach und effizient gestaltet. Insbesondere können durch die Verbindung der Abdeckschale mit dem Grundträger, während dieser zumindest im Bereich der Aufnahmen frei von der Abdeckschale bleibt, eine sichere Anbindung des herzustellenden Fahrzeugrades erzielt werden. In Bezug auf mögliche Verbindungsarten zwischen dem Grundträger, dem Felgenring und der Abdeckschale wird auf die Ausführungen zum Fahrzeugrad verwiesen.

Erfindungsgemäß wird die Abdeckschale aus einem Stahlblech, insbesondere mittels Tiefziehen, hergestellt. Dadurch ergeben sich besonders vorteilhafte Steifigkeitseigenschaften bei geringem Gesamtgewicht des Fahrzeugrades, während ein effizientes Herstellungsverfahren verwendet wird, welches für die Massenfertigung geeignet ist. Auch der Grundträger und/oder der Felgenring können vorteilhaft aus Stahlblech hergestellt sein. Insbesondere der Grundträger ist in diesem Fall auch mittels eines Tiefziehvorgangs hergestellt. In Bezug auf alternative Herstellungsverfahren und Materialien wird auf die Ausführungen zum Fahrzeugrad verwiesen.

Wie in Bezug auf das Fahrzeugrad ausgeführt, wird dadurch, dass der Grundträger mit der Abdeckschale verbunden wird, aber zumindest im Bereich der Aufnahmen frei von der Abdeckschale bleibt, erreicht, dass im unmittelbaren Bereich der Aufnahmen kein Material der Abdeckschale vorhanden ist und in dem Bereich der Aufnahmen keine Materialdopplung des Materials von Grundträger einerseits und Abdeckschale andererseits entsteht. Bei der Montage des Fahrzeugrades, beispielsweise auf eine Nabe des Fahrzeugs, kann daher insbesondere erreicht werden, dass die Anbindungsmittel zwar den Grundträger unmittelbar mit dem Fahrzeug verbinden, jedoch nicht die Abdeckschale. Die Abwesenheit der Abdeckschale im Bereich der Aufnahmen beeinflusst im Ergebnis die sichere Anbindung des Fahrzeugrades positiv, sodass im Ergebnis ein Verfahren zur Herstellung eines Fahrzeugrades angegeben werden kann, welches trotz eines geringen Gewichts und einer ausreichenden Steifigkeit bei hoher Design-Flexibilität keinen Verspannkraftverlust besitzt. In Bezug auf die Verbindung zwischen der Abdeckschale und dem Grundträger und auch bezüglich einer Verbindung zwischen der Abdeckschale und dem Felgenring und/oder zwischen dem Grundträger und dem Felgenring wird auf die Ausführungen zum Fahrzeugrad verwiesen.

Gemäß einer vorteilhaften Ausgestaltung des Verfahrens wird der Grundträger für verschiedene Abdeckschalen identisch hergestellt. Somit können verschiedene Abdeckschalen verwendet werden, welche jedoch mit einem identischen Grundträger kompatibel oder kombinierbar sind. Dies führt zu einem effizienten Herstellungsprozess, da für unterschiedlich gestaltete Fahrzeugräder lediglich die Abdeckschale angepasst wird und keine unterschiedlichen Werkzeuge für die Herstellung des Grundträgers benötigt werden.

Ebenso wird für mögliche Ausgestaltungen und Vorteile des Herstellungsverfahrens auf die Ausführungen zum Fahrzeugrad verwiesen.

Weitere vorteilhafte Ausgestaltungen der Erfindung werden nun im Zusammenhang mit den nachfolgend anhand einer Zeichnung beschriebenen Ausführungsbeispielen näher erläutert. In der Zeichnung zeigt
- Fig. 1: schematisch ein Ausführungsbeispiel eines Verfahrens zur Herstellung eines ersten Ausführungsbeispiels eines Fahrzeugrades,
- Fig. 2: das Fahrzeugrad aus Fig. 1 frontal von der Außenseite gesehen,
- Fig. 3: ein zweites Ausführungsbeispiel eines Fahrzeugrades in einer perspektivischen Ansicht von der Außenseite gesehen und
- Fig. 4: ein drittes Ausführungsbeispiel eines Fahrzeugrades in einer perspektivischen Ansicht von der Außenseite gesehen.

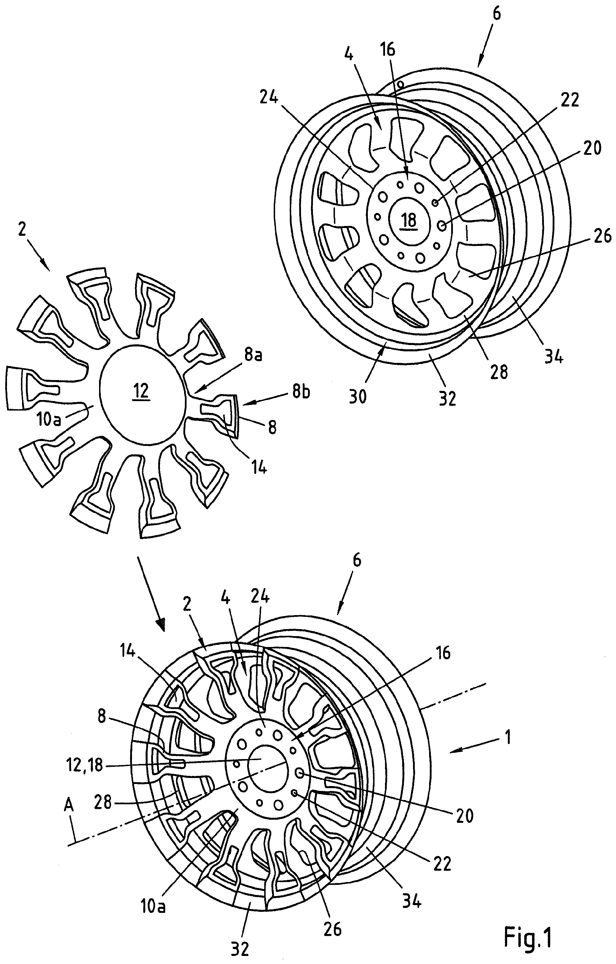

Fig. 1 zeigt schematisch ein Verfahren zur Herstellung eines Fahrzeugrades 1. Dargestellt ist einerseits eine Abdeckschale 2 und andererseits ein Grundträger 4 zusammen mit einem Felgenring 6, welche bereits miteinander verbunden dargestellt sind. Die Abdeckschale 2 wird mit dem Verbund aus Grundträger 4 und Felgenring 6 zu dem dargestellten Fahrzeugrad 1 gefügt, wie durch die Pfeile angedeutet.

Die Abdeckschale 2 ist in diesem Ausführungsbeispiel in Speichenbauweise ausgeführt und weist die gleich ausgebildeten Speichen 8 auf. In diesem Fall sind zehn Speichen vorgesehen, es kann jedoch auch eine andere Anzahl vorgesehen sein. Die Speichen 8 erstrecken sich im Wesentlichen in radialer Richtung, wobei die Speichen 8 an ihrem radial inneren Ende 8a mit einem ringförmigen Bereich 10a verbunden sind. Der ringförmige Bereich 10a begrenzt dabei eine mittige, runde Lochung 12. Der ringförmige Bereich dient als potentieller Anbindungsbereich der Abdeckschale 2 mit dem Grundträger 4. Die radial äußeren Enden 8b der Speichen 8 weisen zudem jeweils einen Anbindungsbereich auf, welche in diesem Fall zur Anbindung der Abdeckschale 2 an den Felgenring 6 dienen. Alternativ oder zusätzlich kann damit jedoch auch eine Anbindung an den Grundträger 4 vorgesehen sein. Die Speichen 8 weisen zudem jeweils eine Aussparung 14 auf, welche zu einer Gewichtsreduktion führen und zugleich einen gewünschten visuellen Eindruck hervorrufen können. Die Abdeckschale 2 ist zudem leicht Trichterförmig ausgebildet, die Abdeckschale 2 ist also in radial einwärtiger Richtung gesehen zur Innenseite des Fahrzeugrades 1 gebogen. Die Abdeckschale 2 ist in diesem Beispiel mittels Tiefziehen aus einem Stahlblech, beispielsweise Edelstahl, hergestellt. Es können aber auch alternative Metalle wie Aluminium oder Magnesium eingesetzt werden..

Der Grundträger 4 ist ebenfalls schalen- oder tellerförmig ausgebildet und ebenfalls in Speichenbauweise ausgeführt. Der Grundträger 4 weist in seinem mittigen Bereich einen Anbindungsbereich 16 auf, welcher zur Anbindung des Fahrzeugrades 1 an das Fahrzeug (nicht dargestellt) dient. Der Anbindungsbereich 16 weist eine mittige, runde Nabenöffnung 18 auf, welche auf eine Nabe des Fahrzeugs gesteckt werden kann. Um die Nabenöffnung 18 herum sind in diesem Fall fünf als Bolzenlöcher ausgeführte Aufnahmen 20 auf einem konzentrischen Kreis um die Nabenöffnung 18 herum und in gleichmäßigen Abständen angeordnet. Die Bolzenlöcher 20 können nicht dargestellte Anbindungsmittel in Form von Bolzen, Schrauben oder Stiften zur Anbindung an das Fahrzeug aufnehmen. Zwischen zwei Bolzenlöchern 20 ist jeweils ein weiteres Positionierungsloch 22 angeordnet, welche die Montage an das Fahrzeug erleichtern können. An den Anbindungsbereich 16 schließt sich in radial auswärtiger Richtung gesehen eine Versteifungswelle 24 in Form einer nach außen gewölbten Wulst an. Die Versteifungswelle 24 läuft ebenfalls konzentrisch um die Achse A des Fahrzeugrades 1 bzw. um die Nabenöffnung 18 des Grundträgers 4 herum. An diesen ringförmigen inneren Bereich des Grundträgers 4 schließen sich gleich ausgebildete Speichen 26 mit ihrem radial inneren Enden an. In diesem Fall sind genauso viele Speichen wie in der Abdeckschale 2 vorgesehen, es kann jedoch auch eine andere Anzahl vorgesehen sein. Die Speichen 26 erstrecken sich im Wesentlichen in radialer Richtung. Die radial äußeren Enden der Speichen 26 sind wiederum mit einem ringförmigen Bereich 28 verbunden, welcher zur Anbindung des Grundträgers 4 an den Felgenring 6 dient. Der Grundträger 4 ist in diesem Fall ebenfalls aus einem Stahlblech durch Tiefziehen gefertigt.

Der Felgenring 6 ist im Wesentlichen zylinderförmig mit einer Öffnung 30 ausgeführt, wobei der Grundträger bereits in der Öffnung 30 angeordnet ist. Das Profil des Felgenrings 6 weist insbesondere einen umlaufenden Felgenhorn 32 und ein umlaufendes Tiefbett 34 auf. Der Felgenring ist in diesem Fall aus profiliertem Stahlblech hergestellt. Allerdings kann beispielsweise auch faserverstärkter Kunststoff vorgesehen sein.

Nachdem der Grundträger 4 und der Felgenring 6 separat hergestellt wurden, ist der Grundträger 4 mit dem ringförmigen Bereich 28 mit dem Felgenring 6 im Bereich des Tiefbetts 34 verbunden worden. Beispielsweise kann der Grundträger 4 mit dem Felgenring 6 verschweißt oder verlötet sein, beispielsweise mittels MAG-Schweißen oder mittels MIG-Löten. Alternativ oder zusätzlich kann jedoch auch ein Verkleben oder ein Einpressen durchgeführt werden.

Nach der Verbindung von Grundträger 4 und Felgenring 6 wird der Verbund mit der Abdeckschale 2 verbunden, sodass sich das in Fig. 1 dargestellte Fahrzeugrad 1 ergibt. Die Abdeckschale ist dabei von der Außenseite auf den Verbund aus Grundträger 4 und Felgenring 6 aufgebracht. Da die Lochung 12 der Abdeckschale 2 an die Versteifungswelle 24 des Grundträgers 4 angepasst ist, endet die Abdeckschale 2 in radial einwärtiger Richtung gesehen mit dem ringförmigen Bereich 10a im Bereich der Versteifungswelle 24 des Grundträgers 4. Dadurch bleibt der Grundträger 4 im Anbindungsbereich 16 und somit im Bereich der Aufnahmen 20 frei von der Abdeckschale 2. Dadurch, dass Grundträger 4 jedenfalls im Bereich der Aufnahmen 20 frei von der Abdeckschale 2 ist, ist im unmittelbaren Bereich der Aufnahmen 20 kein Material der Abdeckschale 2 vorhanden, sodass in diesem Bereich keine Materialdopplung des Materials von Grundträger 4 und Abdeckschale 2 entsteht. Bei der Montage des Fahrzeugrades 1 werden die Anbindungsmittel (nicht dargstellt) zwar mit den Aufnahmen 20 im Grundträger 4 interagieren, jedoch nicht mit der Abdeckschale 2, sodass die Abdeckschale 2 nicht unmittelbar an der Anbindung des Fahrzeugrades 1 an das Fahrzeug beteiligt ist. Dadurch wird eine sichere Anbindung des Fahrzeugrades 1 an das Fahrzeug ermöglicht, da die notwendige Vorspannung durch die Anbindungsmittel durch die Abdeckschale 2 im Bereich der Aufnahmen 20 nicht negativ beeinflusst wird.

Alternativ kann die Abdeckschale 2 jedoch in ihrem mittigen Bereich 12 auch durchgängig gestaltet werden. Dann kann durch eine zumindest abschnittsweise Beabstandung der Abdeckschale 2 von dem Grundträger 4 erreicht werden, dass der Grundträger 4 im Bereich der Aufnahmen 20 frei von der Abdeckschale 2 ist.

Bei einem alternativen Herstellungsverfahren kann auch zunächst die Abdeckschale 2 mit dem Grundträger 4 verbunden und anschließend der Verbund in den Felgenring 6 eingesetzt und mit diesem verbunden werden.

Die Abdeckschale 2 ist in diesem Fall mit dem Grundträger 4 im ringförmigen Bereich 10a der Abdeckschale 2 verbunden. Zudem ist die Geometrie der Speichen 8 der Abdeckschale 2 jedenfalls abschnittsweise an die Geometrie der Speichen 26 des Grundträgers 4 angepasst. Dadurch ist es möglich die Abdeckschale 2 auch im Bereich der Speichen 8 mit dem Grundträger 4 zu verbinden. Beispielsweise ist die Abdeckschale im Rand- oder Kantenbereich der Speichen 8 mit den Speichen 26 zumindest abschnittsweise verbunden. Weiterhin sind die Enden 8b der Speichen 8 der Abdeckschale an dem Felgenhorn 32 des Felgenrings 6 angepasst. Dadurch ist in diesem Bereich eine Verbindung der Abdeckschale 2 mit dem Felgenring 6 möglich. Die Verbindungen können beispielsweise mittels Schweißen, Löten, Kleben oder Einpressen realisiert sein, um nur einige Beispiele zu nennen.

Aufgrund der gegenseitigen Verbindungen zwischen Grundträger 4, Felgenring 6 und Abdeckschale 2 wird erreicht, dass sowohl der Grundträger 4 als auch die Abdeckschale 2 eine Tragestruktur bilden und gemeinsam die Betriebslast des Fahrzeugreifens 1 tragen. Dadurch kann die Blechdicke des Grundträgers 4 im Vergleich zu konventionellen Stahlrädern reduziert sein. Eine ausreichende Steifigkeit des Fahrzeugrades 1 ist gewährleistet, obwohl keine unmittelbare Anbindung der Abdeckschale 2 mittels der Anbindungsmittel erfolgt. Gleichzeitig wird jedoch durch den modularen Aufbau des Fahrzeugrades in Form von Grundträger 4 und Abdeckschale 2 eine hohe Design-Vielfalt bzw. ein variables Design des Fahrzeugrades 1 erzielt.

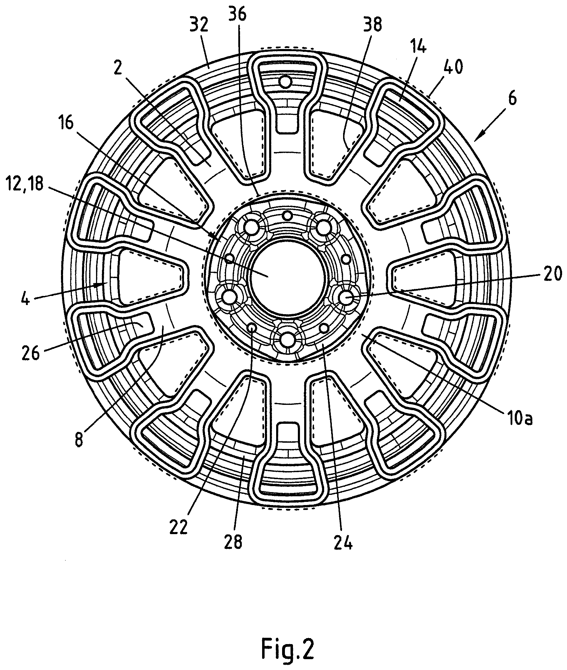

Die in diesem Beispiel möglichen Verbindungszonen der Abdeckschale zu dem Grundträger und zu dem Felgenring sind in Fig. 2, welche das Fahrzeugrad aus Fig. 1 frontal von der Außenseite gesehen zeigt, noch einmal dargestellt. In den Bereichen 36 und 38 kann eine Verbindung der Abdeckschale 2 mit dem Grundträger 4 erfolgen, während in den Breichen 40 eine Verbindung der Abdeckschale 2 mit dem Felgenring erfolgen kann. Es können jedoch auch nur einzelne der Bereiche oder Teilbereiche zur Verbindung der Abdeckschale 2 verwendet werden.

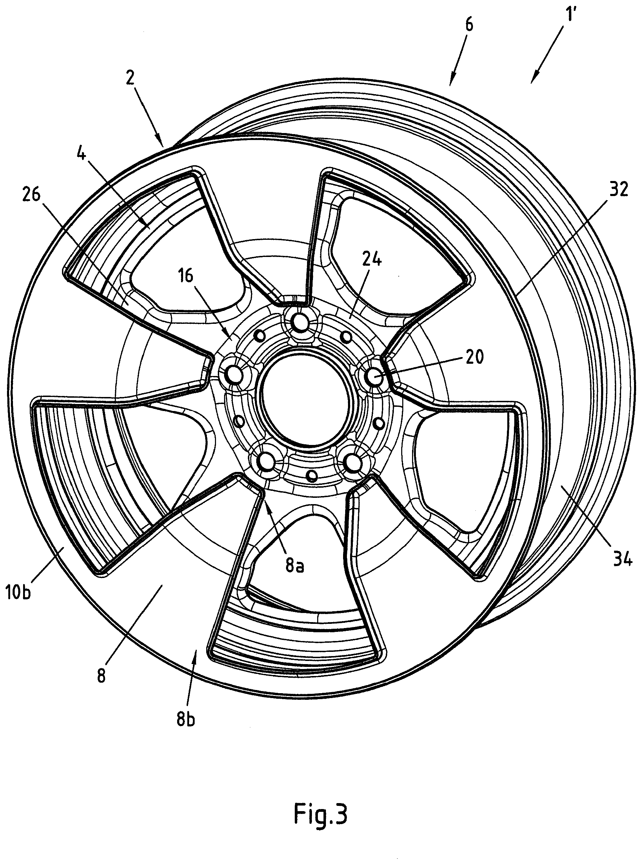

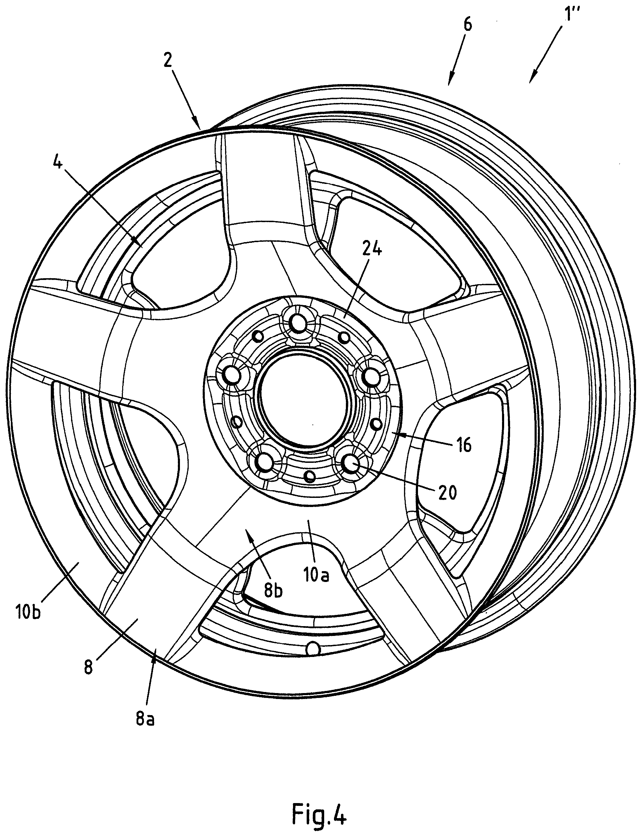

In den Fig. 3 und 4 sind ein zweites und ein drittes Ausführungsbeispiel eines Fahrzeugrades 1' bzw. 1" in einer perspektivischen Ansicht dargestellt. Die Fahrzeugräder 1' und 1" unterscheiden sich hauptsächlich durch die Abdeckschalen 2 und die Grundträger 4 von dem in den Fig. 1 und 2 gezeigten Fahrzeugrad 1. Der Felgenring 6 ist jedoch gleich ausgebildet. Insofern wird im Folgenden lediglich auf die Unterschiede zu dem bereits beschriebenen Fahrzeugrad 1 eingegangen.

Die Abdeckschale 2 und der Grundträger 4 des in Fig. 3 gezeigten Fahrzeugrads 1' bestehen in diesem Fall jeweils aus fünf Speichen 8 bzw. 26. Die Speichen weisen keine Aussparungen 14 auf. Der Grundträger 4 aus Fig. 3 ist im Übrigen jedoch wie der Grundträger 4 des Fahrzeugrads 1 ausgebildet. Die Speichen 8 der Abdeckschale 2 sind im Ausführungsbeispiel der Fig. 3 an ihren radial äußeren Enden 8b durch einen ringförmigen Bereich 10b verbunden, an den radial inneren Enden 8a der Speichen 8 ist kein ringförmiger Bereich vorgesehen. Die Abdeckschale 2 endet in radial einwärtiger Richtung gesehen mit ihren radial inneren Enden 8a der Speichen 8 im Bereich der Versteifungswelle 24 des Grundträgers 4, wobei sich die Speichen 8 in radial einwärtiger Richtung verjüngen. Im Ergebnis ist der Grundträger 4 wieder im Anbindungsbereich 16 und somit im Bereich der Aufnahmen 20 frei von der Abdeckschale 2. Die Abdeckschale 2 bietet aufgrund des ringförmigen Bereichs 10b flexible Verbindungsmöglichkeiten mit dem Felgenring 6 am Felgenhorn 32.

Die Abdeckschale 2 und der Grundträger 4 des in Fig. 4 gezeigten Fahrzeugrads 1" bestehen ebenfalls aus fünf Speichen 8. Der Grundträger 4 aus Fig. 4 entspricht dem Grundträger 4 des Fahrzeugrades 1' aus Fig. 3. Die Speichen 8 der Abdeckschale 2 sind im Ausführungsbeispiel der Fig. 4 sowohl an ihren radial inneren Enden 8a als auch an ihren radial äußeren Enden 8b durch jeweils einen ringförmigen Bereich 10a bzw. 10b verbunden. Dadurch wird eine erhöhte Steifigkeit der Abdeckschale 2 und damit des Fahrzeugrades 1" erreicht. Die Abdeckschale 2 endet in radial einwärtiger Richtung gesehen im Bereich der Versteifungswelle 24 des Grundträgers 4, sodass der Grundträger 4 wiederum im Anbindungsbereich 16 und somit im Bereich der Aufnahmen 20 frei von der Abdeckschale 2 ist.

Auch bei den Fahrzeugrädern 1' und 1" wird erreicht, dass der Grundträger 4 und die Abdeckschale 2 gemeinsam eine Tragestruktur bilden und gemeinsam die Betriebslast des Fahrzeugreifens 1' bzw. 1" tragen, wodurch insbesondere die Blechdicke des Grundträgers 4 im Vergleich zu konventionellen Stahlrädern reduziert werden kann.

Wie weiterhin durch einen Vergleich der Fahrzeugräder 1' und 1" der Fig. 3 und 4 zu erkennen ist, kann für unterschiedliche Abdeckschalen 2 und damit unterschiedliche Designs der gleiche Felgenring 6 und insbesondere der gleiche Grundträger 4 verwendet werden. Es muss für ein anderes Design also lediglich die Abdeckschale 2 angepasst bzw. ausgetauscht werden.

## Patentansprüche

1. Fahrzeugrad, insbesondere für Kraftfahrzeuge,
- mit einem eine Öffnung (30) aufweisenden Felgenring (6),
- mit einem zumindest teilweise in der Öffnung (30) des Felgenrings (6) angeordneten Grundträger (4), wobei der Grundträger (4) einen Anbindungsbereich (16) mit Aufnahmen (20) für Anbindungsmittel zur Anbindung des Fahrzeugrades (1, 1', 1") an das Fahrzeug aufweist, und
- mit einer Abdeckschale (2) zur zumindest teilweisen Abdeckung des Grundträgers (4), wobei die Abdeckschale (2) derart ausgestaltet ist, dass der Grundträger (4) zumindest im Bereich der Aufnahmen (20) frei von der Abdeckschale (2) ist, wobei die Abdeckschale (2) mit dem Grundträger (4) und dem Felgenring (6) stoffschlüssig verbunden ist,
**dadurch gekennzeichnet, dass**
der Grundträger (4) zumindest im Bereich der Aufnahmen (20) frei von der Abdeckschale (2), so dass die Anbindungsmittel zwar mit den Aufnahmen (20) im Grundträger (4) interagieren, jedoch nicht mit der Abdeckschale (2), so dass die Abdeckschale (2) nicht an der Anbindung des Grundträgers (4) an das Fahrzeug beteiligt ist, wobei die Abdeckschale (2) aus einem Stahlblech hergestellt ist oder aus einem Material aufweisend Edelstahl, Aluminium und/oder Magnesium besteht, wobei die Abdeckschale (2) einen Teil, insbesondere einen im Vergleich zum Grundträger (4) geringeren Teil, der Betriebslast trägt.

2. Fahrzeugrad nach Anspruch 1, **dadurch gekennzeichnet, dass** die Abdeckschale eine mittige Lochung (12) aufweist, so dass der Grundträger (4) zumindest im Bereich der Aufnahmen (20) frei von der Abdeckschale (2) ist.

3. Fahrzeugrad nach Anspruch 1 oder 2, **dadurch gekennzeichnet, dass** der Grundträger eine Versteifungswelle (24) aufweist und die Abdeckschale (2) in radial einwärtiger Richtung gesehen zumindest abschnittsweise im Bereich der Versteifungswelle (2) endet.

4. Fahrzeugrad nach einem der Ansprüche 1 bis 3, **dadurch gekennzeichnet, dass** der Grundträger (4) und die Abdeckschale (2) in Speichenbauweise ausgebildet sind und die Speichen (8) der Abdeckschale (2) zumindest abschnittsweise zumindest einen Teil der Speichen (26) des Grundträgers (4) überdecken.

5. Fahrzeugrad nach Anspruch 4, **dadurch gekennzeichnet, dass** die Abdeckschale (2) mindestens einen ringförmigen Bereich (10a, 10b) aufweist, welcher die Speichen (8) der Abdeckschale an ihren radial äußeren Enden (8b) und/oder an ihren radial inneren Enden (8a) verbindet.

6. Fahrzeugrad nach einem der Ansprüche 1 bis 5, **dadurch gekennzeichnet, dass** der Grundträger (4), und/oder der Felgenring (6) aus einem Stahlblech hergestellt sind.

7. Fahrzeugrad nach einem der Ansprüche 1 bis 6, **dadurch gekennzeichnet, dass** der Grundträger (4) und/oder der Felgenring (6) aus einem Material aufweisend Edelstahl, Aluminium, Magnesium, ein Mehrlagenmaterial und/oder einen faserverstärkten Kunststoff bestehen.

8. Fahrzeugrad nach einem der Ansprüche 1 bis 7, **dadurch gekennzeichnet, dass** die Abdeckschale (2), der Grundträger (4) und/oder der Felgenring (6) aus einem an die Beanspruchung lokal angepassten Halbzeug hergestellt sind.

9. Fahrzeugrad nach einem der Ansprüche 1 bis 8, **dadurch gekennzeichnet, dass** der Felgenring (6) mit dem Grundträger (4) und/oder der Abdeckschale (2) im Bereich eines Tiefbetts (34) des Felgenrings (6) und/oder im Bereich eines Felgenhorns (32) des Felgenrings (6) miteinander verbunden ist.

10. Verfahren zur Herstellung eines Fahrzeugrades nach einem der Ansprüche 1 bis 9, wobei
- ein eine Öffnung aufweisender Felgenring,
- ein zumindest teilweise in der Öffnung des Felgenrings anordenbarer Grundträger mit einem Anbindungsbereich mit Aufnahmen für Anbindungsmittel zur Anbindung des Fahrzeugrades an das Fahrzeug, und
- eine Abdeckschale zur zumindest teilweisen Abdeckung des Grundträgers bereitgestellt wird, wobei
der Grundträger mit der Abdeckschale verbunden wird und zumindest im Bereich der Aufnahmen frei von der Abdeckschale bleibt,
**dadurch gekennzeichnet, dass**
zunächst der Grundträger mit dem Felgenring und anschließend die Abdeckschale mit dem Grundträger und zusätzlich mit dem Felgenring verbunden wird, oder zunächst der Grundträger mit der Abdeckschale und anschließend der Felgenring mit dem Grundträger und zusätzlich mit der Abdeckschale verbunden wird, wobei die Abdeckschale aus einem Stahlblech, insbesondere mittels Tiefziehen, hergestellt wird.

11. Verfahren nach Anspruch 10, **dadurch gekennzeichnet, dass** der Grundträger für verschiedene Abdeckschalen identisch hergestellt wird.

## Claims

1. Vehicle wheel, in particular for motor vehicles,
- having a wheel-rim ring (6) which has an opening (30),
- having a main member (4) which is arranged at least partially in the opening (30) of the wheel-rim ring (6), wherein the main member (4) has an attachment region (16) with receptacles (20) for attachment means for attachment of the vehicle wheel (1, 1', 1") to the vehicle, and
- having a covering shell (2) for at least partially covering the main member (4), wherein the covering shell (2) is designed such that the main member (4) is free from the covering shell (2) at least in the region of the receptacles (20), wherein the covering shell (2) is substance-to-substance bonded to the main member (4) and the wheel-rim ring (6),
**characterized in that**
the main member (4) is free from the covering shell (2) at least in the region of the receptacles (20), such that the attachment means duly interact with the receptacles (20) in the main member (4), but not with the covering shell (2), such that the covering shell (2) does not participate in the attachment of the main member (4) to the vehicle, wherein the covering shell (2) is produced from sheet steel or is composed of a material having high-grade steel, aluminium and/or magnesium, wherein the covering shell (2) bears a part of the operating load, in particular bears a smaller part of the operating load than the main member (4).

2. Vehicle wheel according to Claim 1, **characterized in that** the covering shell has a central hole (12) such that the main member (4) is free from the covering shell (2) at least in the region of the receptacles (20).

3. Vehicle wheel according to Claim 1 or 2, **characterized in that** the main member has a stiffening undulation (24), and the covering shell (2) ends at least in sections in the region of the stiffening undulation (2) as viewed in a radially inward direction.

4. Vehicle wheel according to one of Claims 1 to 3, **characterized in that** the main member (4) and the covering shell (2) are of spoked type of construction, and the spokes (8) of the covering shell (2), at least in sections, cover at least a part of the spokes (26) of the main member (4).

5. Vehicle wheel according to Claim 4, **characterized in that** the covering shell (2) has at least one ring-shaped region (10a, 10b) which connects the spokes (8) of the covering shell at their radially outer ends (8b) and/or at their radially inner ends (8a).

6. Vehicle wheel according to one of Claims 1 to 5, **characterized in that** the main member (4) and/or the wheel-rim ring (6) are produced from sheet steel.

7. Vehicle wheel according to one of Claims 1 to 6, **characterized in that** the main member (4) and/or the wheel-rim ring (6) are composed of a material having high-grade steel, aluminium, magnesium, a multi-layer material and/or a fibre-reinforced plastic.

8. Vehicle wheel according to one of Claims 1 to 7, **characterized in that** the covering shell (2), the main member (4) and/or the wheel-rim ring (6) are produced from a semifinished part locally adapted to the loading.

9. Vehicle wheel according to one of Claims 1 to 8, **characterized in that** the wheel-rim ring (6) is connected to the main member (4) and/or to the covering shell (2) in the region of a well base (34) of the wheel-rim ring (6) and/or in the region of a wheel-rim flange (32) of the wheel-rim ring (6).

10. Method for producing a vehicle wheel according to one of Claims 1 to 9, wherein
- a wheel-rim ring which has an opening,
- a main member which can be at least partially arranged in the opening of the wheel-rim ring and which has an attachment region with receptacles for attachment means for attachment of the vehicle wheel to the vehicle, and
- a covering shell for at least partially covering the main member are provided, wherein the main member is connected to the covering shell and remains free from the covering shell at least in the region of the receptacles,
**characterized in that**,
firstly, the main member is connected to the wheel-rim ring, and subsequently, the covering shell is connected to the main member and additionally to the wheel-rim ring, or, firstly, the main member is connected to the covering shell, and subsequently, the wheel-rim ring is connected to the main member and additionally to the covering shell, wherein the covering shell is produced from sheet steel, in particular by deep drawing.

11. Method according to Claim 10, **characterized in that** the main member is produced in identical form for different covering shells.

## Revendications

1. Roue de véhicule, en particulier pour véhicules automobiles,
- comportant un anneau de jante (6) comprenant une ouverture (30),
- comportant un support de base (4) disposé au moins partiellement dans l'ouverture (30) de l'anneau de jante (6), le support de base (4) comprenant une région de connexion (16) dotée de logements (20) pour des moyens de connexion servant à la connexion de la roue de véhicule (1, 1', 1") au véhicule, et
- comportant une coque de recouvrement (2) servant au recouvrement au moins partiel du support de base (4), la coque de recouvrement (2) étant configurée de telle sorte que le support de base (4) est exempt de la coque de recouvrement (2) au moins dans la région des logements (20), la coque de recouvrement (2) étant reliée par liaison de matière au support de base (4) et à l'anneau de jante (6),
**caractérisée en ce que**
le support de base (4) est exempt de la coque de recouvrement (2) au moins dans la région des logements (20), de sorte que les moyens de connexion interagissent certes avec les logements (20) dans le support de base (4), mais pas avec la coque de recouvrement (2), de sorte que la coque de recouvrement (2) ne participe pas à la connexion du support de base (4) au véhicule, la coque de recouvrement (2) étant fabriquée à partir d'une tôle d'acier ou étant constituée d'une matière comprenant de l'acier fin, de l'aluminium et/ou du magnésium, la coque de recouvrement (2) supportant une partie de la charge de fonctionnement, en particulier une partie plus petite par comparaison avec le support de base (4).

2. Roue de véhicule selon la revendication 1, **caractérisée en ce que** la coque de recouvrement comprend une perforation centrale (12), de sorte que le support de base (4) est exempt de la coque de recouvrement (2) au moins dans la région des logements (20).

3. Roue de véhicule selon la revendication 1 ou 2, **caractérisée en ce que** le support de base comprend une ondulation de raidissement (24) et la coque de recouvrement (2) se termine au moins dans certaines zones dans la région de l'ondulation de raidissement (2), vue dans le sens radialement vers l'intérieur.

4. Roue de véhicule selon l'une des revendications 1 à 3, **caractérisée en ce que** le support de base (4) et la coque de recouvrement (2) sont réalisés suivant une construction à rayons et les rayons (8) de la coque de recouvrement (2) recouvrent au moins une partie des rayons (26) du support de base (4) au moins dans certaines zones.

5. Roue de véhicule selon la revendication 4, **caractérisée en ce que** la coque de recouvrement (2) comprend au moins une région annulaire (10a, 10b), laquelle relie les rayons (8) de la coque de recouvrement à leurs extrémités (8b) radialement extérieures et/ou à leurs extrémités (8a) radialement intérieures.

6. Roue de véhicule selon l'une des revendications 1 à 5, **caractérisée en ce que** le support de base (4) et/ou l'anneau de jante (6) sont fabriqués à partir d'une tôle d'acier.

7. Roue de véhicule selon l'une des revendications 1 à 6, **caractérisée en ce que** le support de base (4) et/ou l'anneau de jante (6) sont constitués d'une matière comprenant de l'acier fin, de l'aluminium, du magnésium, une matière multicouche et/ou une matière synthétique renforcée par des fibres.

8. Roue de véhicule selon l'une des revendications 1 à 7, **caractérisée en ce que** la coque de recouvrement (2), le support de base (4) et/ou l'anneau de jante (6) sont fabriqués à partir d'un produit semi-fini adapté localement à la sollicitation.

9. Roue de véhicule selon l'une des revendications 1 à 8, **caractérisée en ce que** l'anneau de jante (6) est relié au support de base (4) et/ou à la coque de recouvrement (2) dans la région d'une base creuse (34) de l'anneau de jante (6) et/ou dans la région d'un rebord de jante (32) de l'anneau de jante (6).

10. Procédé de fabrication d'une roue de véhicule selon l'une des revendications 1 à 9, dans lequel
- un anneau de jante comprenant une ouverture,
- un support de base pouvant être disposé au moins partiellement dans l'ouverture de l'anneau de jante et comportant une région de connexion dotée de logements pour des moyens de connexion servant à la connexion de la roue de véhicule au véhicule, et
- une coque de recouvrement servant au recouvrement au moins partiel du support de base sont fournis, dans lequel le support de base est relié à la coque de recouvrement et demeure exempt de la coque de recouvrement au moins dans la région des logements,
**caractérisée en ce que**
tout d'abord le support de base est relié à l'anneau de jante et ensuite la coque de recouvrement est reliée au support de base et en outre à l'anneau de jante, ou tout d'abord le support de base est relié à la coque de recouvrement et ensuite l'anneau de jante est relié au support de base et en outre à la coque de recouvrement, la coque de recouvrement étant fabriquée à partir d'une tôle d'acier, en particulier par emboutissage profond.

11. Procédé selon la revendication 10, **caractérisé en ce que** le support de base est fabriqué de manière identique pour différentes coques de recouvrement.
